# EUROPÄISCHE PATENTSCHRIFT

(11) **EP 1 613 698 B1**
(45) Veröffentlichungstag und Bekanntmachung des Hinweises auf die Patenterteilung: **25.06.2008**
(21) Anmeldenummer: 04722245.0
(22) Anmeldetag: 22.03.2004
(51) Int. Cl.: C08L 77/06, C08K 5/5313

(54) **FLAMMGESCHÜTZTE POLYAMIDFORMMASSEN**
FLAMEPROOF POLYAMIDE MOULDING MATERIALS
MATIERES A MOULER POLYAMIDE IGNIFUGES

(30) Priorität: 11.04.2003 DE 10316873
(43) Veröffentlichungstag der Anmeldung: 11.01.2006
(73) Patentinhaber: EMS-Chemie AG, 7013 Domat/Ems (CH)
(72) Erfinder: SCHNEIDER, Ewald, CH-7414 Fürstenau (CH)
(74) Vertreter: Pfenning, Meinig & Partner GbR
(86) Internationale Anmeldenummer: PCT/EP2004/002992
(87) Internationale Veröffentlichungsnummer: WO 2004/090036

(56) Entgegenhaltungen:
- WO-A-02/28953
- DE-A- 2 447 727
- PATENT ABSTRACTS OF JAPAN Bd. 2000, Nr. 26, 1. Juli 2002 (2002-07-01) -& JP 2001 261973 A (DAICEL CHEM IND LTD), 26. September 2001 (2001-09-26)

## Beschreibung

Die Erfindung betrifft halogenfreie, flammgeschützte Formmassen auf Basis teilaromatischer, teilkristalliner Polyamide, die Salze von Phosphinsäuren als Flammschutzmittel enthalten. Wegen ihrer Formbeständigkeit bei hohen Temperaturen und des günstigen Brandverhaltens eignen sich diese Formmassen zur Herstellung von insbesonders dünnwandigen Formkörpern für die Elektro- und Elektronik-Industrie wie beispielsweise Konnektoren.

Teilaromatische, teilkristalline Polyamide mit Schmelzpunkten von mindestens 280°C werden verbreitet zur Herstellung von Formmassen verwendet, welche die Herstellung von Formkörpern, z.B. für die Elektro- und Elektronik-Industrie, mit ausgezeichneter Formbeständigkeit bei hohen Temperaturen und sehr guten flammhemmenden Eigenschaften ermöglichen. Derartige Formmassen werden beispielsweise in der Elektronik-Industrie zur Herstellung von Bauteilen verlangt, die auf Printed Circuit Boards nach der sogenannten Surface Mounting Technology, SMT, montiert werden. In dieser Anwendung müssen diese Bauteile kurzzeitig Temperaturen von bis zu 270°C ohne Dimensionsänderung überstehen. Da man wegen der Miniaturisierung insbesonders in der Elektronik-Industrie sehr dünnwandige Komponenten herstellt, wird für die dafür eingesetzten Formmassen eine Brandklassierung gemäss UL94 von V0 bei 0.4mm gefordert.

Als Flammschutzmittel für teilaromatische, teilkristalline Polyamide werden bevorzugt Halogenverbindungen oder Roter Phosphor eingesetzt, da diese bei Temperaturen von über 300°C, wie sie für die Herstellung und Verarbeitung derartiger Formmassen notwendig sind, noch ausreichend thermische Stabilität aufweisen. Die Verwendung von bromiertem Polystyrol als Flammschutzmittel ist aus EP 0 410 301 und EP 0 288 269, jene von Rotem Phosphor aus EP 0 299 444 bekannt. Halogenhaltige flammgeschützte Polyamide sind neben anderen Nachteilen toxikologisch bedenklich, da sie bei der Entsorgung durch Verbrennen halogenhaltige Substanzen freisetzen. Polyamide, die Roten Phosphor enthalten, besitzen eine dunkle Eigenfarbe, was die Möglichkeiten zur Einfärbung beschränkt. Darüber hinaus sind bei der Herstellung und Verarbeitung von teilaromatischen Polyamiden mit Rotem Phosphor als Flammschutzmittel wegen der erforderlichen hohen Temperaturen und der Bildung von toxischem Phosphin erhebliche Sicherheitsvorkehrungen notwendig.

Aus diesen Gründen werden Flammschutzmittel vorgeschlagen, welche die oben genannten Nachteile nicht besitzen. So ist aus EP 0 792 912 die Verwendung von Calcium- und Aluminiumsalzen der Phosphin- und Diphosphinsäuren als Flammschutzmittel für Polyamide beschrieben. Als besonders geeignete Polyamide werden Polyamid 6 und Polyamid 66 genannt. Daraus hergestellte Formmassen erreichen nach UL94 die Brandklasse V0 bei einer Probekörperdicke von 1.2mm. Ein Hinweis auf die Eignung der Phosphinsalze als Flammschutzmittel in teilaromatischen Polyamiden, insbesonders auf die Möglichkeit der Einarbeitung in derartige Polyamide bei Temperaturen von weit über 300°C, wird nicht gegeben.

Die Verwendung von Phosphinsäuresalzen als Flammschutzadditiv in teil-aromatischen Polyamiden beschreibt DE-A1-24 47 727. Bei diesen teilaromatischen Polyamiden handelt es sich um amorphe Polyamide mit Erweichungsbereichen von deutlich unter 300°C, deren Formbeständigkeit bei hohen Temperaturen die Anforderungen, wie sie an Komponenten für die Surface Mounting Technology gestellt werden, nicht erfüllt.

US 6.270.560 schützt die Kombination von u.a. Aluminium-Phosphinaten und Aluminium-Phosphonaten als Flammschutzmittel in Polyestern und Polyamiden. Die aufgeführten Beispiele belegen die Wirkung in Polyester, geben aber keinen Hinweis auf deren flammhemmende Wirkung in Polyamiden.

In WO 99/02606 wird die Kombination von Metallsalzen der Phosphinsäure mit Kondensationsprodukten von Melamin als Flammschutzmittel für Polyamide, darunter auch teilaromatische Polyamide, beschrieben. Gemäss dieser Schrift braucht es in teilaromatischen, d.h. hochschmelzenden Polyamiden mindestens 30 Gew.% an Metallsalz der Phosphinsäure als Flammschutzmittel, um gemäss UL94 eine Klassifizierung von V0 zu erreichen. Derartig hohe Zusatzmengen können sich negativ auf die mechanischen Eigenschaften der Formkörper auswirken. Die Beispiele weisen aus, dass in glasfaserverstärktem Polyamid PA 6.6/6.T/6.I mit der Kombination von Zink-Phosphinat und Melam eine Brandklasse von V0 bei 1.6mm erreicht wird.

US 2001/0007888 A1 beansprucht die Verwendung von nicht halogenhaltigen, organischen Flammschutzmitteln, u.a. Salze von Phosphinsäuren, in aromatischen Polyestern und/oder Polyamiden. Die Beispiele zeigen die Wirkung von Calcium-Phosphinat in Kombination mit Rotem Phosphor in Polyamid 6, wobei im UL94-Test eine Brandklasse von V0 bei 1/16" (ca. 1.6mm) ermittelt wird, legen aber in keiner Weise den Einsatz von Salzen der Phosphinsäuren in hochschmelzenden teilaromatischen Polyamiden als Flammschutzmittel nahe.

Für die gemäss Stand der Technik beschriebenen flammhemmend ausgerüsteten Polyamidformmassen wird eine Brandklasse von V0 bis zu einer Prüfkörperdicke von nicht unter 1.2 mm gefunden. Damit ist die Forderung nach Brandklasse V0 bei 0.4 mm, wie sie von der Elektro- und Elektronikindustrie für die Herstellung dünnwandiger Formteile gestellt wird, nicht erfüllt.

Ausgehend hiervon ist es die Aufgabe der vorliegenden Erfindung, flammgeschützte Polyamidformmassen anzugeben, die ein halogenfreies Flammschutzmittel enthalten und die die Forderung nach der Brandklasse V0 bei 0.4 mm Prüfkörperdicke erfüllen.

Die Erfindung wird durch die kennzeichnenden Merkmale des Patentanspruchs 1 gelöst. Die Unteransprüche zeigen vorteilhafte Weiterbildungen auf.

Es wurde nun überraschenderweise gefunden, dass der Einsatz von Salzen der Phosphinsäuren als Flammschutzmittel in teilaromatischen, teilkristallinen Polyamiden mit Schmelzpunkten von mindestens 280°C thermoplastische Formmassen liefert, die eine Brandklassierung gemäss des UL-94-Tests (Underwriter Laboratories) von V0 bei einer Dicke des Prüfkörpers von 0.4mm erzielen, weshalb sie sich für die Herstellung sehr dünnwandige Formkörper, insbesonders von halogenfreien Bauteilen für elektrische und elektronische Geräte mit sehr guter Flammwidrigkeit geeignet sind. Diese Formkörper besitzen eine ausgezeichnete Formbeständigkeit bei hohen Temperaturen (HDT/A gemessen nach ISO 75) und können somit ohne Einschränkung in der Surface Mounting Technology eingesetzt werden. Sie erfüllen auch die gestiegenen Anforderungen, die sich in dieser Technik durch die Umstellung auf bleifreie Lötmaterialien und damit verbunden höhere Prozesstemperaturen ergeben.
Gegenstand der Erfindung ist somit eine flammgeschützte Polyamidformmasse bestehend aus
a) 30 - 80 Gew.% eines teilaromatischen, teilkristallinen Polyamids
b) 1 - 30 Gew.% eines Flammschutzmittels enthaltend ein Phosphinsäuresalz der Formel (I) und/oder ein Diphosphinsäuresalz der Formel (II) und/oder deren Polymere 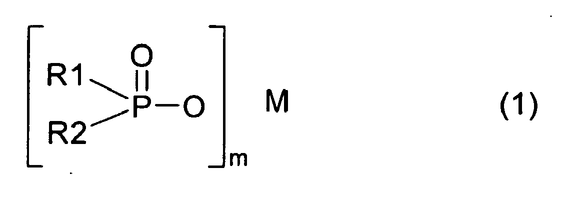 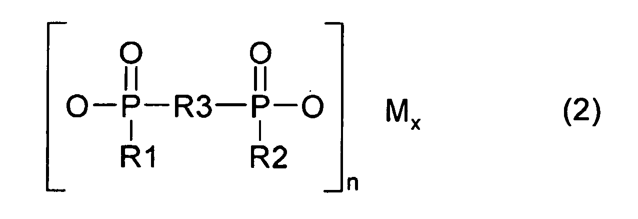 worin
   - R¹, R²: gleich oder verscheiden sind und C1-C6-Alkyl, linear oder verzweigt und/oder Aryl,
   - R³: C1-C10-Alkylen, linear oder verzweigt, C6-C10-Arylen, -Alkylarylen oder Arylalkylen;
   - M: Metallion aus der 2. oder 3. Haupt- oder Nebengruppe des Periodensystems;
   - m: 2 oder 3;
   - n: 1 oder 3;
   - x: 1 oder 2
   bedeuten,
c) 5 - 60 Gew.% eines faser- oder teilchenförmigen Füllstoffes oder deren Mischungen
d) 0.05 - 10 Gew.% sowie Additive ausgewählt aus Stabilisatoren, Verarbeitungs-Hilfsmittel, Antidripping-Mittel, Farbstoff und/oder Pigment.

Als erfindungsgemässe teilaromatische, teilkristalline Polyamide können entweder Homopolyamide oder Copolyamide eingesetzt werden, deren wiederkehrende Einheiten aus Dicarbonsäuren und Diaminen sowie aus Aminocarbonsäuren bzw. der entsprechenden Lactame abgeleitet sind. Geeignete Dicarbonsäuren sind aromatische und aliphatische Dicarbonsäuren wie beispielsweise Terephthalsäure, Isophthalsäure, Adipinsäure, Azeiainsäure, Sebazinsäure, Dodekandicarbonsäure und 1,4-Cyclohexandicarbonsäure. Geeignete Diamine sind aliphatische und cycloaliphatische Diamine wie beispielsweise Hexamethylendiamin, Nonamethylendiamin, Dekamethylendiamin, Dodekamethylendiamin, 2-Methylpentamethylendiamin, 1,4-Cyclohexandiamin, Di-(4-diaminocyclo-hexyl)-methan, Di-(3-methyl-4-aminocyclohexyl)-methan. Geeignete Aminocarbonsäuren sind Aminocapronsäure und Aminolaurinsäure, die auch in Form der entsprechenden Lactame Caprolactam und Laurinlactam eingesetzt werden können.

Die Schmelzpunkte dieser teilaromatischen Polyamide liegen zwischen 280 und 340°C, bevorzugt zwischen 295 und 325°C.

Besonders bevorzugt bei den Polyamiden sind solche, die aus Terephtalsäure (TPS), Isophtalsäure (IPS) und Hexamethyldiamin oder aus Terephtalsäure, Adipinsäure und Hexamethyldiamin gebildet worden sind. Als günstige Verhältnisse haben sich dabei ca. 70:30 TPS:IPS bzw. 55:45 TPS:Adipinsäure herausgestellt. Die überlegenen Eigenschaften werden insbesondere durch diese beiden speziellen Polyamide realisiert.

Bei den Flammschutzmitteln gemäss der Erfindung handelt es sich um Salze der Phosphinsäure der Formel (I) und/oder der Diphosphinsäure der Formel (II) und/oder deren Polymere. Geeignete Phosphinsäuren für die Herstellung der erfindungsgemässen Phosphinsäuresalze sind beispielsweise Dimethylphosphinsäure, Ethylmethylphosphinsäure, Diethylphosphinsäure, Methyl-n-propylphosphinsäure, Methan-di(methylphosphinsäure), Ethan-1,2-di(methyl-phosphinsäure), Hexan-1,6-di(methylphosphinsäure), Benzol-1,4-di(methylphosphinsäure), Methyl-phenyl-phosphinsäure, Diphenylphosphinsäure.

Die erfindungsgemässen Phosphinsäuresalze können nach bekannten Methoden, wie sie beispielsweise in EP 0 699 708 beschrieben sind, hergestellt werden. Die Phosphinsäuren werden dabei in wässriger Lösung mit Metallcarbonaten, Metallhydroxiden oder Metalloxiden umgesetzt, wobei im wesentlichen monomere, je nach Reaktionsbedingungen unter Umständen auch polymere Phosphinsäuresalze entstehen.

Die Phosphinsäuresalze gemäss den Formeln (I) und (II) können Ionen von Metallen aus der 2. oder 3. Haupt- oder Nebengruppe des Periodensystems enthalten, bevorzugt werden die Calcium- und Aluminium-Salze der Phosphinsäuren. Diese Phosphinsäuresalze können auch in Form ihrer Gemische eingesetzt werden. Sie werden bevorzugt in Pulverform angewendet, um bei der Einarbeitung in das Polymere eine gute Dispergierung zu erzielen.

Die erfindungsgemässen Formmassen enthalten als Komponente b) 1 - 30, bevorzugt 5 - 25, besonders bevorzugt 8 - 20 Gew.% eines Phosphinsäuresalzes der Formel (I) und/oder ein Diphosphinsäuresalz der Formel (II) und/oder deren Polymere.

Als Komponente c) können die erfindungsgemässen Formmassen 5 - 60 Gew.% an faser- oder teilchenförmigen Füllstoffen oder deren Mischungen enthalten. Als Beispiele für faserförmige Füllstoffe seien faserförmige Verstärkungsmittel wie Glasfasern, Kohlenstofffasern, Aramidfasern, Kaliumtitanatwhisker genannt, wobei Glasfasern bevorzugt sind. Die Einarbeitung der Glasfasern in die Formmassen kann entweder in Form endloser Stränge (Rovings) oder in geschnittener Form (Kurzglasfasern) erfolgen. Zur Verbesserung der Verträglichkeit mit den teilaromatischen Polyamiden können die verwendeten Glasfasern mit einer Schlichte und einem Haftvermittler ausgerüstet sein. Der Durchmesser der üblicherweise verwendeten Glasfaser liegt im Bereich von 6 - 20 µm.

Als teilchenförmige Füllstoffe eignen sich unter anderen Glaskugeln, Kreide, gepulverter Quarz, Talkum, Wollastonit, Kaolin, Glimmer.

Übliche Additive als Komponente d) sind beispielsweise Wärmeschutzmittel, Antioxidantien, Lichtschutzmittel, Gleitmittel, Entformungsmittel, Nukleierungs-mittel, Pigmente, Farbstoffe, Antdripping-Mittel.

Die erfindungsgemässen flammgeschützten Polyamidformmassen können nach an sich bekannten Verfahren hergestellt werden. Dazu werden die Bestandteile vorgemischt und anschliessend in einem Compoundieraggregat, z.B. ein Doppelschneckenextruder, homogenisiert. Ein übliches Vorgehen besteht darin, die Komponenten a) bis d) einzeln oder nur teilweise vorgemischt über separate Dosieranlagen in das Compoundieraggregat einzubringen. Die Homogenisierung in der Polymerschmelze erfolgt bei Temperaturen, die je nach Schmelzpunkt des teilaromatischen Polyamids bei 290 - 350°C liegen. Die Schmelze wird üblicherweise als Strang abgezogen, gekühlt und granuliert.

Die erfindungsgemässen Formmassen eignen sich zur Herstellung von Formkörpern nach dem Spritzgussverfahren.

Die Erfindung betrifft weiterhin die Verwendung der vorstehend beschriebenen Formmassen zur Herstellung von Formkörpern. Bei den erfindungsgemäßen Formmassen ist insbesonders hervorzuheben, dass sich diese eignen zur Herstellung von Formkörpern, die die Forderung der Brandklasse V0 bei 0,4 mm Prüfkörperdicke erfüllen. Dies war aus dem Stand der Technik auch so nicht vorhersehbar, da wie auch nachfolgend gezeigt wird, durch Vergleichsbeispiele untermauert werden konnte, dass Polyamide, die nicht zu der ausgewählten Klasse der Erfindung gehören, diese Forderung nicht erfüllen können. Besonders bevorzugt ist es deshalb, wenn die Formmassen beispielsweise in der Elektroindustrie zur Herstellung von Bauteilen eingesetzt werden, die auf Printed Circuit Boards nach der sog. Surface Mounting Technology, SMT, montiert werden. In dieser Anwendung müssen die Bauteile nämlich kurzzeitig Temperaturen von bis zu 270° C ohne Dimensionsänderung überstehen. Bauteile, die diese Forderung erfüllen, sollten deshalb der Brandklassierung gemäß UL 94 von V0 bei 0,4 mm entsprechen.

In den Beispielen werden folgende Ausgangsstoffe zur Herstellung erfindungsgemässer Formmassen eingesetzt:
Komponente a)
   - Polyamid 1:: Polyamide 6T/66 mit einem molaren Verhältnis von Terephthalsäure zu Adipinsäure von 55:45
   - Polyamid 2:: Polyamide 6T/6I mit einem molaren Verhältnis von Terephthalsäure zu Isophthalsäure von 70:30
   - Polyamid 3:: Polyamid 66 (Vergleich)
Komponente b)
   Aluminium-Dimethylphosphinat (hergestellt aus Dimethylphosphinsäure und Aluminiumhydroxid) Calcium-Ethylmethylphosphinat (hergestellt aus Methyl-Ethylphosphinsäure und Calciumoxid)
Komponente c)
   Standard-Glasfaser für Polyamide, Faserlänge 4.5mm, Durchmesser 10µm
Komponente d)
   Irganox 1098 (Ciba Specialities)
   Ca-Stearat

### Beispiele

Die Ausgangsstoffe wurden in den in Tabelle 1 aufgeführten Mengen, die jeweils in Gew.% angegeben sind, mittels eines ZSK30 Zweischnecken-Extruders von Werner&Pfleiderer zu den entsprechenden Formmassen compoundiert. Die Komponenten a) und d) wurden vorgemischt und so wie Komponente b) über Dosierwaagen in die Einzugszone des Extruder gefördert. Die Glasfasern wurde über einen Side-Feeder zugeführt. Die Homogenisierung der Komponenten erfolgte bei Temperaturen von 300 - 340°C.

Die Formmassen wurden als Strang ausgetragen, in einem Wasserbad gekühlt und anschliessend granuliert. Das Granulat wurde auf einen Feuchtegehalt von < 0.05 % getrocknet und auf einer Spritzgussmaschine zu Prüfkörpern verarbeitet. Es wurden daran folgende Prüfungen durchgeführt:
● Brandtest nach UL-94 an Prüfkörpern mit einer Dicke von 0.4mm nach üblicher Konditionierung
● Elastizitätsmodul nach ISO 527, spritzfrisch
● Schlagzähigkeit bei 23°C nach ISO 179/1eU, spritzfrisch
● HDT/A nach ISO 75

**Tabelle 1**

| | | Vergleichsbeispiel | Beispiel 1 | Beispiel 2 |
|---|---|---|---|---|
| Zusammensetzung Gew.% | | | | |
| Polyamid 1 | | | 55.4 | |
| Polyamid 2 | | | | 46.4 |
| Polyamid 3 | | 55.4 | | |
| Al-Dimethylphosphinat | | 14 | 14 | |
| Ca-Ethylmethylphosphinat | | | | 18 |
| Glasfaser | | 30 | 30 | 35 |
| Irganox 1098 | | 0.25 | 0.25 | 0.25 |
| Ca-Stearat | | 0.35 | 0.35 | 0.35 |

| Prüfungen | | | | |
|---|---|---|---|---|
| Brandtest UL-94 | Klassierung | | | |
| 0.4mm | | | V-0 | V-0 |
| 0.8mm | | V-1 | V-0 | V-0 |
| 1.6mm | | V-0 | | |
| Elastizitätsmodul | MPa | 10400 | 12200 | 14000 |
| HDT/A | °C | 248 | 287 | 285 |

## Patentansprüche

1. Flammgeschützte Polyamidformmassen bestehend aus
a) 30 - 80 Gew.% eines teilaromatischen, teilkristallinen Polyamids
b) 1 - 30 Gew.% eines Flammschutzmittels enthaltend ein Phosphinsäuresalze der Formel (I) und/oder ein Diphosphinsäuresalz der Formel (II) und/oder deren Polymere 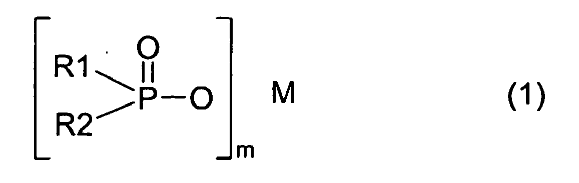 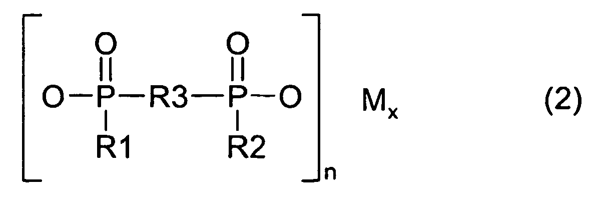 worin
R¹, R² gleich oder verschieden sind und C1-C6-Alkyl, linear oder verzweigt und/oder Acryl,
R³ C1-C10-Alkylen, linear oder verzweigt, C6-C10-Arylen, -Alkylarylen oder Arylalkylen;
M Metallion aus der 2. oder 3. Haupt- oder Nebengruppe des Periodensystems;
m 2 oder 3;
n 1 oder 3;
x 1 oder 2
bedeuten,
c) 5 - 60 Gew.% eines faser- oder teilchenförmigen Füllstoffes oder deren Mischungen
d) 0.05 - 10 Gew.% Additive ausgewählt aus Stabilisatoren, Verarbeitungs-Hilfsmittel, Antidripping-Mittel, Farbstoff und/oder Pigment
wobei die Summe a) bis d) 100 Gew.% ergibt.

2. Flammgeschützte Polyamidformmasse nach Anspruch 1, **dadurch gekennzeichnet, dass** das teilaromatische Polyamid einen Schmelzpunkt von mindestens 280°C, bevorzugt von mindestens 295°C besitzt.

3. Flammgeschützte Polyamidformmasse nach Anspruch 1 und 2, **dadurch gekennzeichnet, dass** das teilaromatische Polyamid a) aus der Gruppe, gebildet durch Polyamide, deren wiederkehrende Einheiten abgeleitet sind von Terephthalsäure, gegebenenfalls einer weiteren aromatischen Dicarbonsäure und/oder einer oder mehrerer aliphatischen oder cycloaliphatischen Dicarbonsäure sowie von aliphatischen und/oder cycloaliphatischen Diaminen sowie gegebenfalls von aliphatischen Aminosäuren, ausgewählt ist.

4. Flammgeschützte Polyamidformmasse nach Anspruch 3, **dadurch gekennzeichnet, dass** das teilaromatische Polyamid a) aus der Gruppe, gebildet durch Polyamide, deren wiederkehrende Einheiten abgeleitet sind von Terephthalsäure, Adipinsäure und gegebenfalls Isophthalsäure sowie von Hexamethylendiamin, ausgewählt ist.

5. Polyamidformmasse nach einem der vorhergehenden Ansprüche, **dadurch gekennzeichnet, dass** das Polyamid aus Terephtalsäure (TPS) und Isophtalsäure (IPS) und Hexamethylendiamin gebildet ist.

6. Polyamidformmasse nach Anspruch 5, **dadurch gekennzeichnet, dass** das Polyamid aus TPS und IPS im Verhältnis von ca. 70:30 gebildet ist.

7. Polyamidformmasse nach einem der vorhergehenden Ansprüche 1 bis 4, **dadurch gekennzeichnet, dass** das Polyamid aus Terephtalsäure (TPS) und Adipinsäure und Hexamethylendiamin gebildet ist.

8. Polyamidformmasse nach Anspruch 7, **dadurch gekennzeichnet, dass** das Polyamid aus TPS und Adipinsäure im Verhältnis von ca. 55:45 gebildet ist.

9. Flammgeschützte Polyamidformmasse nach einem der vorhergehenden Ansprüche, **dadurch gekennzeichnet, dass** als Flammschutzmittel b) ein Phosphinsäuresalz der Formel (I) und/oder ein Diphosphinsäuresalz der Formel (II) und/oder deren Polymere, worin M für Calcium- oder Aluminium-Ionen steht, eingesetzt wird.

10. Flammgeschützte Polyamidformmasse nach einem der vorhergehenden Ansprüche, **dadurch gekennzeichnet, dass** das als Flammschutzmittel verwendete Phosphinsäuresalz in einer Menge von 1 - 30 Gew.%, bevorzugt 5 - 25 Gew.%, besonders bevorzugt 8 - 20 Gew.% bezogen auf die Gesamtformulierung enthalten ist.

11. Verwendung der flammgeschützten Formmassen nach einem der Ansprüche 1 - 11 zur Herstellung von Formkörpern.

12. Verwendung nach Anspruch 11 zur Herstellung von Formkörpern, die die Forderung nach der Brandklasse V0 bei 0,4 mm Prüfkörperdicke erfüllen.

## Claims

1. Flame-proof polyamide moulding materials, consisting of
a) from 30 to 80 % by weight of a partially aromatic, partially crystalline polyamide,
b) from 1 to 30 % by weight of a flame-proofing agent containing a phosphinic-acid salt of formula (I) and/or a diphosphinic-acid salt of formula (II) and/or the polymers thereof 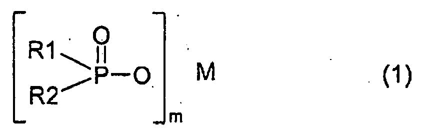 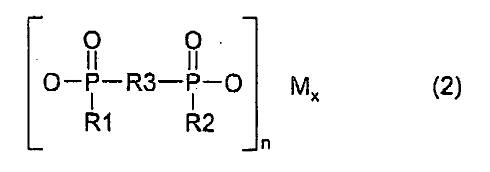 in which
**R¹, R²** are the same or equal and C₁ to C₆ alkyl, linear or branched and/or acryl,
**R³** is C₁ to C₁₀ alkylene, linear or branched, C₆ to C₁₀ arylene, alkyl arylene or aryl alkylene,
**M** is a metallic ion of the 2nd or 3rd main group or sub-group of the Periodic Table,
**m** is 2 or 3,
**n** is 1 or 3,
**x** is 1 or 2,
c) from 5 to 60 % by weight of a filler in the form of fibres or particles or mixtures thereof,
d) from 0.05 to 10 % by weight of additives selected from stabilizers, processing auxiliary agents, anti-dripping agents, dye and/or pigment,
in which the sum of a) to d) amounts to 100 % by weight.

2. A flame-proof polyamide moulding material according to Claim 1, **characterized in that** the partially aromatic polyamide has a melting point of at least 280°C, and preferably of at least 295°C.

3. A flame-proof polyamide moulding material according to Claims 1 and 2, **characterized in that** the partially aromatic polyamide a) from the group, formed by polyamides, the recurring units of which are derived, is selected from terephthalic acid, optionally a further aromatic dicarboxylic acid and/or one or more aliphatic or cycloaliphatic dicarboxylic acids as well as from aliphatic and/or cycloaliphatic diamines as well as optionally from aliphatic amino acids.

4. A flame-proof polyamide moulding material according to Claim 3, **characterized in that** the partially aromatic polyamide a) from the group, formed by polyamides, the recurring units of which are derived, is selected from terephthalic acid, adipinic acid and optionally isophthalic acid as well as from hexamethylenediamine.

5. A polyamide moulding material according to any one of the preceding Claims, **characterized in that** the polyamide is formed from terephthalic acid (TPS) and isophthalic acid (IPS) and hexamethylenediamine.

6. A polyamide moulding material according to Claim 5, **characterized in that** the polyamide is formed from TPS and IPS in the ratio of approximately 70 : 30.

7. A polyamide moulding material according to any one of the preceding Claims 1 to 4, **characterized in that** the polyamide is formed from terephthalic acid (TPS) and adipinic acid and hexamethylenediamine.

8. A polyamide moulding material according to Claim 7, **characterized in that** the polyamide is formed from TPS and adipinic acid in the ratio of approximately 55 : 45.

9. A flame-proof polyamide moulding material according to any one of the preceding Claims, **characterized in that** a phosphinic-acid salt of formula (I) and/or a diphosphinic-acid salt of formula (II) and/or the polymers thereof is or are used as the flame-proofing agent b), wherein **M** stands for calcium ions or aluminium ions.

10. A flame-proof polyamide moulding material according to any one of the preceding Claims, **characterized in that** the phosphinic-acid salt used as a flame-proofing agent is contained in a quantity of from 1 to 30 % by weight, preferably from 5 to 25 % by weight, and in a particularly preferred manner from 8 to 20 % by weight with respect to the overall formulation.

11. Use of the flame-proof polyamide moulding materials according to any one of Claims 1 to 11 for producing moulded bodies.

12. Use according to Claim 11 for producing moulded bodies which meet the requirement in accordance with the fire class V0 with a thickness of the test sample of 0·4 mm.

## Revendications

1. Matières à mouler polyamide ignifugées, constituées de
a) 30 - 80 % en poids d'un polyamide partiellement aromatique, partiellement cristallin
b) 1 - 30 % en poids d'un agent ignifuge contenant un sel d'acide phosphinique de formule (I) et/ou un sel d'acide diphosphinique de formule (II) et/ou des polymères de ceux-ci 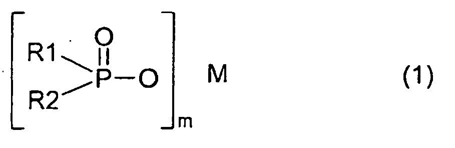 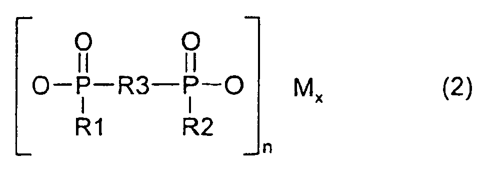 formules dans lesquelles
R¹, R² sont identiques ou différents et représentent un groupe alkyle en C₁-C₆, linéaire ou ramifié, et/ou un groupe acryloyle ;
R³ représente un groupe alkylène en C₁-C₁₀ linéaire ou ramifié, arylène en C₆-C₁₀, alkylarylène en C₆-C₁₀ ou arylalkylène ;
M représente un ion métallique du groupe 2A ou 3A ou du groupe 2B ou 3B du système périodique ;
m est 2 ou 3 ;
n est 1 ou 3 ;
x est 1 ou 2 ;
c) 5 - 60 % en poids d'une charge fibreuse ou particulaire ou de mélanges de telles charges,
d) 0,05 - 10 % en poids d'additifs choisis parmi des stabilisants, des adjuvants de mise en oeuvre, des agents anti-coulure, un colorant et/ou un pigment.
La somme de a) à d) étant égale à 100 % en poids.

2. Matière à mouler polyamide ignifugée conforme à la revendication 1, **caractérisée en ce que** le polyamide partiellement aromatique a un point de fusion d'au moins 280 °C, de préférence d'au moins 295 °C.

3. Matière à mouler polyamide ignifugée conforme à la revendication 1 ou 2, **caractérisée en ce que** le polyamide partiellement aromatique a) est choisi dans l'ensemble constitué par des polyamides dont les motifs répétitifs sont dérivés de l'acide téréphtalique, éventuellement d'un autre acide dicarboxylique aromatique et/ou d'un ou plusieurs acides dicarboxyliques aliphatiques ou cycloaliphatiques ainsi que de diamines aliphatiques et/ou cycloaliphatiques ainsi qu'éventuellement d'acides aminés aliphatiques.

4. Matière à mouler polyamide ignifugée conforme à la revendication 3, **caractérisée en ce que** le polyamide partiellement aromatique a) est choisi dans l'ensemble constitué par des polyamides dont les motifs répétitifs sont dérivés de l'acide téréphtalique, de l'acide adipique et éventuellement de l'acide isophtalique ainsi que de l'hexaméthylènediamine.

5. Matière à mouler polyamide selon l'une quelconque des revendications précédentes, **caractérisée en ce que** le polyamide est à base d'acide téréphtalique (ATP) et d'acide isophtalique (AIP) et d'hexaméthylènediamine.

6. Matière à mouler polyamide selon la revendication 5, **caractérisée en ce que** le polyamide est constitué d'ATP et d'AIP dans le rapport d'environ 70:30.

7. Matière à mouler polyamide selon l'une quelconque des revendications 1 à 4 précédentes, **caractérisée en ce que** le polyamide est constitué d'acide téréphtalique (ATP) et d'acide adipique et d'hexaméthylènediamine.

8. Matière à mouler polyamide selon la revendication 7, **caractérisée en ce que** le polyamide est constitué d'ATP et d'acide adipique dans le rapport d'environ 55:45.

9. Matière à mouler polyamide ignifugée conforme à l'une quelconque des revendications précédentes, **caractérisée en ce qu'**on utilise comme agent ignifuge b) un sel d'acide phosphinique de formule (I) et/ou un sel d'acide diphosphinique de formule (II) et/ou des polymères de ceux-ci, dans lesquels M représente l'ion calcium ou aluminium.

10. Matière à mouler polyamide ignifugée conforme à l'une quelconque des revendications précédentes, **caractérisée en ce que** le sel d'acide phosphinique utilisé en tant qu'agent ignifuge est contenu en une proportion de 1 - 30 % en poids, de préférence de 5 - 25 % en poids, de façon particulièrement préférée de 8 - 20 % en poids, par rapport à la composition totale.

11. Utilisation des matières à mouler ignifugées conformes à l'une quelconque des revendications 1 à 11, pour la fabrication de corps moulés.

12. Utilisation selon la revendication 11, pour la fabrication de corps moulés qui satisfont à l'exigence selon la classe de résistance au feu V0 pour une épaisseur d'éprouvette de 0,4 mm.
